# EUROPEAN PATENT SPECIFICATION

(11) **EP 3 938 983 B1**
(45) Date of publication and mention of the grant of the patent: **11.06.2025**
(21) Application number: 20707702.5
(22) Date of filing: 10.03.2020
(51) Int. Cl.: G06Q 10/083, G06Q 10/087, G06Q 50/40, G07F 11/16

(54) **DEVICE, SYSTEM AND METHOD FOR MODULAR ITEM STORAGE, TRANSPORTATION AND DELIVERY**
VORRICHTUNG, SYSTEM UND VERFAHREN FÜR AUFBEWAHRUNG, TRANSPORT UND LIEFERUNG MODULARER ARTIKEL
DISPOSITIF, SYSTÈME ET PROCÉDÉ POUR LE STOCKAGE, LE TRANSPORT ET LA LIVRAISON D'ARTICLES MODULAIRES

(30) Priority: 13.03.2019 EP 19162653
(43) Date of publication of application: 19.01.2022
(73) Proprietor: Starship Technologies OÜ, 12618 Tallinn (EE)
(72) Inventor: VÄIN, Lauri, 10415 Tallinn (EE)
(74) Representative: Stellbrink & Partner Patentanwälte mbB
(86) International application number: PCT/EP2020/056381
(87) International publication number: WO 2020/182827

(56) References cited:
- EP-A1- 0 545 019
- WO-A1-2019/020407
- US-A1- 2010 234 995
- US-B1- 10 005 609
- US-B1- 10 222 798

## Description

### Field

The invention is directed towards storing, transporting and delivering items. The invention is also directed towards a mobile robot configured to be outfitted with various containers configured to optimally store different types of items. The invention is further directed towards modular containers removably fitting into mobile robots.

### Introduction

Item transportation, delivery and vending are all growing industries. Mobile robots are increasingly used for different purposes such as package delivery, take-out delivery, mobile vending machines, and other purposes involving transporting items. The use of mobile robots for these purposes can greatly increase efficiency of item delivery, reduce energy expenditures and generally contribute to the availability and speed of various types of item delivery or vending.

For example, international patent application WO 2017/064202A1 discloses autonomous and semi-autonomous mobile robots, in particular robots for transporting deliveries in an unstructured outdoor environment.

Furthermore, US patent 9,741,010 B1 discloses delivery of packages by a mobile robot. More particularly, the invention relates to security measures for robotic package delivery. In the US patent 6,477,442 B1 the system includes a robotic transfer device capable of automatically receiving and opening a pneumatic tube carrier, automatically retrieving a product from a pick-up point and placing the product into the carrier, and automatically closing and distributing the carrier into a pneumatic tube transport system. The invention relates to an automatic transferring of pneumatic tube in a hospital.

US10222798 discloses a modular transporting system consisting of an autonomous ground vehicle and a removable compartment for storing items to be delivered to a destination.

Further developments are needed in this developing era where time is money, and people need things fast and on the go. There is a need for keeping up with the growing item delivery and transport demands and the present invention is an automated robot with a modular containing device which can be easily modified as per the requirement. It also is a method of making sure that the product or service is safe during the process by having advanced and flexible locking mechanism.

### Summary

It is the object of the present invention to provide a mobile robot that is configured to be outfitted with modular containers optimized for different types of item storage, transportation, delivery and/or vending. The modular containers can also be outfitted with several functions to provide various services, such as providing satellite communication and many more. The invention is disclosed in the appended claims.

The mobile robot comprises a locking mechanism that is configured to interact with the corresponding locking mechanism of various modular containers in order to removably attach them to each other. The containers are configured to comprise different internal structures. For example, some containers comprise multiple individually lockable compartments, some comprise indentations for a plurality of consumable items, some comprise additional insulation for temperature-sensitive items, some comprise in-built additional devices such as beverage dispensers.

The locking mechanism can comprise a twist lock that is configured to be quickly locked and unlocked in order to attach various different modules to the mobile robot. The modules can be changed depending on demand for a specific type of item delivery service or according to a planned schedule.

A , modular container device is disclosed. The device comprises a control unit, a first communication component, and a power component. The device is configured to be installed in a mobile robot. The device is configured to share at least one operational transmission with the mobile robot. The device is further configured to be equipped with content wherein the content can be at least one of the but not limited to at least one item distribution, at least one mobile vending machine, at least one mobile outdoor entertainment, mobile package delivery and/or pick up. The modular container can comprise a motion sensor equipped with an accelerometer. The motion sensor can measure a numerical value of the acceleration which is a result of changing force due to the motion of the modular container. This feature is especially useful when the container is performing a function which is motion sensitive. For example, if the container is equipped with the beverage module the result from the motion sensor can warn the container to avoid any spills.

The modular container can comprise a temperature sensor. The temperature sensor can be particularly useful for cases where the components or the function need to be at a specific temperature. For example, if the modular container is fitted with an ice cream parlour it needs to maintain a cool temperature. The temperature sensor can be configured to send at least one temperature data to the control unit.

In some embodiments, the modular container can comprise an inclination sensor, the inclination sensor can be particularly helpful if the component of the function comprises fluid.

The control unit can be a microprocessor-controlled module which is operated independently. In some embodiments the control unit is configured to receive data from all the sensors. The control unit can be equipped with multiple chips with each storing information from one sensor, or a combination of more than one.

In some embodiments, the control unit can be configured to receive at least one first data from one sender via a first communication component. For example, the control unit receives the data from the base unit. The data can comprise a request from a user terminal. This communication can be configured to communicate via one or more of WLAN, Cellular networks, Bluetooth, NFC, Infrared and/or other protocols. The communication can also be cloud-communication where a user terminal can access the required information using the internet-based cloud communication. The control unit can also receive data from a power component. This power component can comprise a vanadium and/or lithium battery which can be configured to charge at the base unit. In some embodiments the power component can comprise at least one or a few solar panels which are configured to be able to charge while the modular container is operated in a sunny environment. The data which control unit receives from the power component can comprise the battery life.

In some embodiments the control unit can be configured to be installed in the lower quarter of the container preferably connected to the power component. Installing control unit in the bottom can optimise the space and it can be easy to make changes to the shape of the container.

In some embodiments the power component can be configured to power at least one of at least one task of the modular container, at least one control unit, at least one communication component and at least one locomotion.

In some embodiments the control unit is configured to send at least one information to a recipient for example, when the control unit receives some operational instructions from the base unit it checks for if the sensor data is all in a predetermined range, if the battery is charged enough, and then send an information to the base unit if it can perform the task.

In some embodiments the control unit is configured to examine the content's status during the performance. For example, if there is an unexpected failure or some component is not working the control unit communicates the information to the base unit to send at least one replacement robots. The status can further comprise information about at least one of the at least one low product level, at least one maintenance required and at least one malfunction of some component of the function.

In some embodiments the modular container can be configured to comprise a width of 40 to 100 cm, a length of 40 to 100 cm, and a height of 20 to 80 cm. The modular container can be fitted to the mobile robot so it's preferred to choose a size to optimize the carrying space in the mobile robot. The modular container can be manufactured with a malleable, lightweight high-density polyethylene. In some embodiments the modular container can be configured to be manufactured of aluminium oxynitride. The material is highly resistant to thermal expansion and is transparent to the electromagnetic waves. This is particularly useful for the sensors and the communication component which can be configured to use infrared and radio waves. The modular container can be configured to be lightweight and firm using the mentioned materials. Since the modular container can be fitted with different functions, it could also be advantageous to be able to see the function of the container from the outside and using aluminium oxynitride will provide that optical transparency.

In some embodiments the modular container is configured to be lined with a polypropylene coating which can be replaced and/or disposed. The lining can be useful to protect the container from spills, scratches, dirt, etc.

In some embodiments the communication component can be installed in the top of the container. Installing in the top will prevent the hindrance from the communication component of the robot which is preferably installed in the bottom or the EM waves from the sensors and/or the control unit.

In some embodiments the communication component can comprise at least one of a short-range communication, a medium-range communication and/or a long-range communication. The short-range communication can comprise communication in the range of 1cm to 1m, for example communication between the container and the base unit when the container is parked at the base unit and/or the communication between the container and the mobile robot. The medium-range can comprise a communication range of 1m to 1km, for example communication between the user terminal and the modular container. Communications more than 1km can be the long-range communications for example communication between the modular container and the base unit while the modular container is at a service site.

The modular container is configured to send an operational instruction and/or a command to the mobile robot. The operational instruction can comprise at least one instruction about at least one of the secure placements of the modular container in the mobile robot and/or the function of the modular container and/or status of the modular container and/or traveling area/region. This can be done via the first short-range communication component by the control unit.

In some embodiments the modular container can be equipped with at least 4 revolving wheels, this can be especially useful when the container is at the base unit which is a big warehouse. The container can automatically and/or semi-automatically move around and travel to the mechanical arm for its installation in the mobile robot. The wheels can be configured to insert in the mobile robot's body once the container is installed in the robot. In some embodiments the container can comprise an optical component such as a camera. The camera can take pictures and/or videos of the components inside the container. This camera can also be configured to send the data to the control unit and then to the base unit for inspection purposes for example.

A system for modular transportation is disclosed. The system comprises at least one mobile robot, a modular container configured to be fitted with the mobile robot, a base unit configured to outfit the modular container to the mobile robot. The mobile robot can comprise a motion component, a second control unit, a first communication component, a first power component.

The system is particularly advantageous as it allows for the modular container be fitted in a mobile robot that is configured to move and travel and navigate, particularly also in outdoor surroundings. In some embodiments, the system can comprise a handling device which can be configured to remove, install and/or replace the modular container in the mobile robot.

The system can comprise a first locking component. The first locking component can be configured to lock the modular container to the mobile robot. The first locking component can be twist lock comprising of a male part and a female part and the male part is fitted to the container and the female part is fitted to the mobile robot and the parts are configured to interlock. The twist lock can further be attached to a handle. The handling device can be configured to insert the twist lock attached to the handle inside the modular container, twist the handle for an angle in the range of 60 degrees to 120 degrees preferable 90 degrees. The handling arm can further pull out the handle and store it in an assigned place. In some embodiments the first locking component can also comprise a wireless electromagnetic lock for additional security, which can be further configured with a solenoid bolt. The solenoid bolt can be further configured to be powered by the second power component. In case of no power the system can be configured to stay in a locked configuration to prevent any thefts.

In some embodiments the mechanical arm can be configured to lift the modular container above the mobile robot. The mechanical arm can the bring the modular container to a height equal to the mobile robot and place the container in the robot. Further, in some embodiments the mechanical arm can lift the handle and/or the twist-lock, interlock the mobile robot and the modular container and can place the handle in a designated area.

The system can comprise a second locking component which can be configured to lock the lid of the mobile robot. The second locking component can comprise two arms, when these arms are aligned in a specific position the lid is unlocked. The motion of these two arms can be controlled by a string which can be controlled by the server and/or the mobile robot. The arms can align in the open position only when the mobile robot is in the base unit and/or in the user terminal.

In some embodiments base unit can comprise at least one parking space. This space can be used to park at least one mobile robot and/or modular container. The base unit can comprise charging pod/s for individual mobile robot and/or modular container. The modular container and/or the mobile robot can be configured to park themselves in a particular pod. Each pod can be configured such as whenever the modular container and/or the mobile robot is in the pod they are charging via a electric cable. The mobile robot and/or the modular container can be equipped with a charging point on the surface which when comes in contact with a second charging point of the charging pod charges the mobile robot and/or the container. This contact can also be equipped with sending the data to the server. The data can be the battery life of the modular container and/or the mobile robot, function of the modular container, etc.

In some embodiments base unit can be configured with a communication component, this component can be used to communicate the data from the modular container and/or the mobile robot parked at the base unit to the server and from the server to the parked mobile robot and/or the modular container. The communication component can comprise a wireless and/or wired communication between the two.

In some embodiments the base unit can comprise a maintenance unit. The maintenance unit can comprise regular check-ups of the battery life, checking on the wheels of the mobile robot, checking if the various sensors are in order, etc. The base unit can also comprise a servicing unit which can be in communication with the maintenance unit. If there is a fault in the functioning of the system the maintenance unit can send the mobile robot and/or the modular container to the servicing unit. Servicing unit can also stock up the modular container if any product/service is running low in any of the provided function.

In some embodiments the system can comprise a server which is configured to control at least one communication between at least one user-terminal and/or the base unit. For example, a user-terminal wants pizza delivery the server will receive the information and send it to a base unit which is nearest to the location of the delivery. The base unit will receive the information and send it to the modular container performing pizza-delivery and/or to an idle mobile robot which has enough power to be able to perform the travel. The modular container and the mobile robot receive the information and travels to handling unit. The handling unit fits them together and the system is starts to perform the task. In some embodiments the system can travel to a second service unit before traveling to the user. For example, in the pizza-delivery function the system can travel to a partnered pizza shop and pick up pizza for delivery there.

In some embodiments the server can be configured to self-learn and recognise a pattern in the delivery in a region and can be prepared in advance. The server can also be configured to teach itself the optimised route to perform a function. And then this information can be shared with the system. For example, in a university area there is a high demand of pizzas at 8pm and the pizza is mainly bought with a beer. So, a server can send some mobile robots fitted with a pizza delivery function to the university area at for example 7:45pm and the modular container can be configured in two compartments one the hot compartment carrying pizza and other cold compartment carrying beer. The server can also learn the apartments making the most orders and the type of pizza ordered the most.

The modular container comprises at least one identification component (ID) which can comprise a machine-readable combination of numbers, characters and alphabets. ID can also comprise an optical machine-readable bar and/or QR code. It can further comprise a near field communication component. ID can also comprise a passive RFID tag. The identification component can be configured to be affixed to the mobile robot, preferably on the open side of the container, which can help to minimise the hindrance to the electromagnetic waves.

The identification component (ID) comprises information related to the geometrical specifications of the container. The ID can also comprise information related to at least one of the content of the modular container and at least the one of a second content the modular container is adapted for and at least one home of the container which can comprise the information about the base unit where the modular container started the first task. The ID can also comprise information related to one service region.

In some embodiments the user-terminal can comprise an app, a kiosk, an audio input, a touch and/or a human. The user terminal can be equipped to communicate with at least one of the at least one server and at least one of the at least one modular container and at least one mobile robot. This communication can comprise sending one request to a server and when the mobile robot approaches communication the location, the service it needs and/or the instructions to unlock the lid of the robot to access the product/service in the modular container.

In some embodiments the optical component and/or the GPS and/or the webcam on the modular container connected to the internet of the modular container and/or the mobile robot can send data to the control unit. The control unit can be equipped with a processing component which can further request virtual objects from the cloud/web server. The server can be equipped to send the virtual objects to the control unit which can then send the augmented content to the AR (augmented reality) browser and display it on the interactive screen of the robot, a handheld device at the user terminal, eyeglass and/or head mounted displays. The processing component can be configured to overlap virtual images to the real-life images generated by the optical component.

In some embodiments the system is configured to switch to a power saving mode when not on demand. This can be useful also while the robot is waiting for the recipient. This in general means that if there is no activity for more than a predefined time the robot and/or the container can turn off some of its functions. The system further comprises a navigation component which can be configure with a GPS.

In some embodiments the modular container can be configured with a vending machine function. The function can comprise of a spiral coil installed in the base of the container and spiralling upwards. The products can be stored in the bottom of the container and can be brought upwards via the spirals to optimise the space in the container. The receiving unit can be at the top of the container. The motion of the coil can be powered by the power component of the modular container. The top of the modular container can be equipped with a collecting area. The mobile robot can be configured to display a list of items contained to the user and communicate the selected item to the modular container. The lid of the mobile robot can be configured to open only when the receiver has performed the required tasks. For example, if the user is buying a drink from the vending machine the lid will open only when the user has chosen the drink and paid for it. The payment in this case can be done via a mobile app for example and/or via a card machine. Receiver can also be a member and thus access the vending machine via a membership card and/or code. The user terminal and/or the receiver can be configured to communicate with at least one mobile robot within a predefined distance. The user-terminal can also be provided with the services/products contained in the nearby mobile robots.

In some embodiments the system can comprise a mobile beverage module. The beverage module can be equipped with a beverage delivery, preparation and/or storing function. The system can comprise a base unit which is equipped with handling device for outfitting at least one ingredient/service to the mobile robot. For example, if one modular container configured to perform coffee making runs out of milk it can be configured to communicate with the server to find out the nearest base unit having milk and can travel to it to get it refilled. The system can further be configured with the augmented reality feature and the user can choose the beverage in a real-life image displayed with a virtual display of the list of the products and can be further configured to personalise the beverage.

In some embodiments the system can be configured with a package delivery and/or pick up function. The modular container can be equipped with a virtual assisting component configured to perform at least one task/service requested by the user terminal. The task/service can comprise at least one unlocking instruction. The modular container can also be configured to communicate the instructions to the server and/or the base unit for verification. The instructions or the user terminal's input can comprise a unique code with numbers and alphabets displayed to the user, a bar code and/or face recognition by the optical component of the system.

The system can comprise at least one product scanning component, which can scan a unique code attached to every product before placing in the container. The scanner can be placed such that the products are scanned while putting in the container and also while removing. The scanner could be a weight sensor, configured to recognise packages by their weights. Since the probability of having two packages of exactly same weight is very low, to be failsafe the scanner could be a bar code reader and/or x-ray scanner which can be configured to remember a package by the x-ray scan. This is useful to make sure the right package is removed at the user-terminal.

In some embodiments the container can comprise compartments of preferably automated modifiable sizes. The compartments can be configured to change sizes according to the size of the package/product. The system can access the information from the server to know the best time and/or optimised route for delivery and/or pick-up. For example, if there is a region of the working people delivering on weekdays during working hours is not a good idea whereas in a region where there are a lot of retired old people delivering on weekdays should not be a problem.

In some embodiments the AR capability of the control unit in combination with the optical component and the interactive component can provide virtual maps of the inside of the container overlapped with a real-life image and user can be asked to choose an optimised size compartment for the package, this can be mainly useful in case of the pick-up service. User can also be provided with an option to enter the size of the package and the robot can decide to unlock the optimised empty compartment.

In some embodiments the system can be configured with an outdoor mobile cinema module. The modular container can be configured with a motorized stand comprising a telecommunication component. The system can be configured to travel to the user's location and provide a plurality of entertainment options. The system can also be configured with a camera equipped with location-based AR application. When the camera is directed towards a real scene, the navigation component can be configured to recognise the location of the system. Based on this recorded location and orientation of the mobile robot the server can offer digital data which can be superimposed to the real scene, which can be visible with at least one of the interactive components of the mobile robot, user's smartphone and/or the telecommunication component. This can be configured to provide user a choice of a parking space for the robot. When user selects a location and/or an orientation on the map, robot can be configured to travel and park itself. This function can specially be useful for example if a user wants to watch a movie in a park.

In some embodiments the system can be configured with a mobile charging station/s, radio communication satellites function. This function can specially be useful in emergency situations. The system can be set to an emergency mode wherein the locking component can be unlocked using a physical ID component. This can comprise a residency permit or a driving license. This can ensure that later when things have calmed the system can know by whom the service has been used by. The mobile robots can also be sent to the war zones without the locking components providing people to access communication in case of urgency.

A second transporting system is disclosed. The system comprises a mobile robot which further comprises a motion component, a second control unit, a second communication component, a second power component, a second port. The system further comprises a container, the container comprises a port, an identifying component (ID), a content. The system further comprises the port of the container configured to be connected with the second port when the container is installed into the mobile robot.

In some embodiments the port and the second port can be configured to be an electrical connection enabling device between the mobile robot and the modular container, for example, pogo pins. The port and the second port can be further connected such that the content of the container can be powered by the second power component and the processing of the content can be done by the second control unit.

In some embodiments the identifying component can be configured to comprise information related to the content of the container. The mobile robot can comprise a ID scanning component. The system can further be configured such that the ID scanning component scans the identifying component and communicates to the mobile robot the information related to the content of the container.

In some embodiments the second control unit of the mobile robot can be configured with multi-core processor component configured to execute simultaneous multithreading which is further configured to execute parallel computing. Furthermore, at least one core of the multi core-processor is configured to process at least one function of the system. Once the information related to the content of the container is received by the second control unit of the mobile robot it can be configured to activate the designated processor to perform the function.

A method for installing at least one modular container at least one mobile robot is disclosed. The method further comprises the steps of installing the modular container to the mobile robot. This installing can be done by at least one mechanical arm/handling device. The method then comprises locking the modular container to the mobile robot, this locking can also be done by the mechanical arm.

Once the modular container is securely installed in the mobile robot, the method can comprise the step of determining the content of the modular container by the mobile robot. This can be done by the first communication component of the modular container or by the electrical signal exchanged between a port of the container and a second port of the mobile robot.

In some embodiments the method can comprise implementing a subroutine configured according to the content of the modular container by the mobile robot. The subroutine can be decided by at least one of the at least one second control unit which is installed in the mobile robot and at least one control unit installed in the modular container.

In some embodiments the method can comprise rotating a first locking component, which can comprise a twist lock. The first locking component can further comprise an electromagnetic lock for additional security. In some embodiments the method can comprise parking of the mobile robot and the modular container at a base unit. The base unit can further be performing, charging of the mobile robot and/or the modular container. The base unit can also be configured for maintaining and/or servicing the mobile robot and the modular container.

In some embodiments the method can comprise changing the modular container in the mobile robot which can be performed by the mechanical arm. The mechanical arm can be configured to be installed in the base unit.

In some embodiments the method comprises sending at least one operational information to at least one mobile robot which can comprise information related to at least one of the at least installing the modular container to the mobile robot and at least status of the modular container and at least the traveling area/region, identification of the modular container.

In some embodiments the method comprising locking a lid of at least one mobile robot only after the secure installation of the modular container, the secure locking can be registered by the second control unit which can then communicate with a second locking component to lock the lid. The second locking component can be configured to remain in the closed position during the transportation.

In some embodiments the method can further comprise at least one of the at least sensing motion and at least sensing successful installation of the modular container to the mobile robot and at least sensing the temperature inside the modular container and at least sensing the inclination of the modular container.

In some embodiments the method comprises establishing communication between at least one user terminal and at least one base unit via at least one server, the server further accessing historical data, which can be stored in the base unit, relating to the mobile robot and modular container.

A method for providing at least one of the at least one good and at least one service via mobile robots is disclosed. The method comprising determining demand for a good and/or service at a specified location at a specified time, outfitting at least one mobile robot with a modular container configured to provide at least one of the at least one good and at least one service, travelling to the specified location at the specified time, providing the service at the location and time to at least one user.

In some embodiments the method can comprise outfitting the mobile robot with a different modular container configured to provide at least one of the at least one food and at least one service.

In some embodiments the method can comprise locking the lid to prevent any access in a closed position and allowing access to at least one part of the modular container in an open position and then the control unit causing the lid to change from the closed position to the open position before communicating to the second control unit via the first and second communication components about the content of the modular container.

In some embodiments the method can comprise, prior to performing the task via the modular container, reading the data from all of the sensors and aborting the task if the data is not in the predetermined range.

In some embodiments the method can comprise taking actions to fall in the safe range and if it is not possible then communicating to at least one of the at least one appropriate mobile robot in the predetermined region and at least the base unit. The method can futher comprise notifying the user about the estimated time of arrival (ETA) of the appropriate mobile robot.

It maybe be noted that the word 'function' and 'module' are both used interchangeably to describe the different components modular container can comprise.

### Brief description of the drawings

Figure 1 schematically depicts the components of the modular container according to an embodiment of the invention;
Figure 2 schematically depicts a communication component according to an embodiment of the invention;
Figure 3 depicts an embodiment of a modular container and the twist locking mechanism to lock the modular container to a mobile robot;
Figure 3a depicts an embodiment of a modular container locked to the mobile robot with a solenoid bolt.
Figure 4 depicts an embodiment of a modular container configured with a beverage module;
Figure 5 shows an embodiment of the mobile robot configured to be fitted with a modular container;
Figure 6 shows an embodiment of a lock configured to lock the lid of the mobile robot;
Figure 7 shows an embodiment of a method with steps involving automatic change of functions in a modular container to distribute item/s.

### Description of embodiments

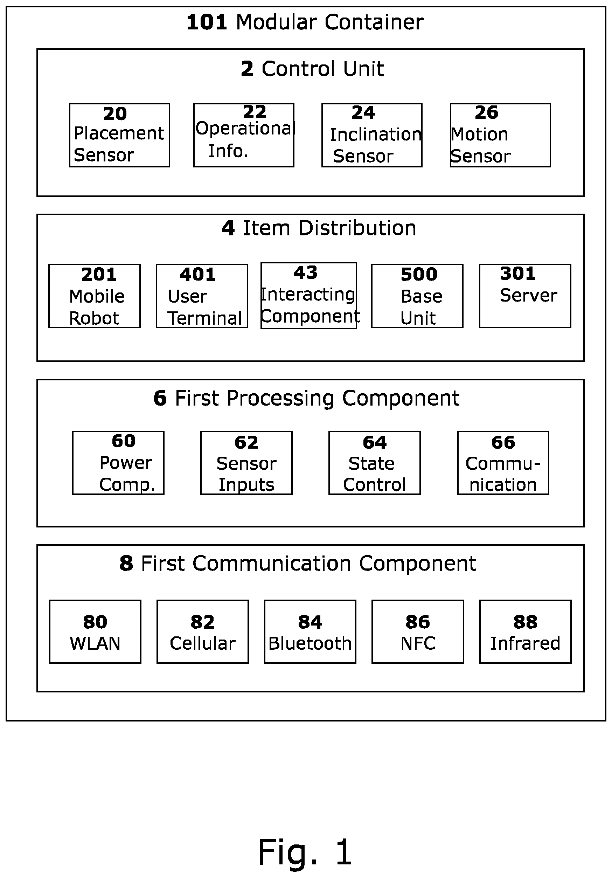

Figure 1 schematically shows an embodiment of a modular container 101. The modular container comprises a control unit 2. The control unit can generally be a microprocessor-controlled module configured to receive data from at least one of the sensors. The sensor can be at least one of a motion sensor 26, a placement sensor 20, a temperature sensor, and an inclination sensor 24.

The motion sensor maybe installed in the base of the container and can be configured with an accelerometer. This accelerometer can measure the acceleration in the motion of the container and output a respective value, the control unit 2 can read this value from the motion sensor 26.

The placement sensor 20 can be a capacitive sensor which can be configured to communicate to the control unit a change in the value of capacitance. The two plates of the capacitor can be constituted by the modular container and the mobile robot. When this value is within a predetermined range the placement of the container in the mobile robot is ensured. The temperature sensor configured to measure the temperature of the components of the modular container.

The inclination sensor 24 configured to measure the slope of the surface that the modular container is resting on. The control unit is configured to receive data from at least one of the above-mentioned sensors and then verifying that all the data is within a predetermined range. Once the data is within the range the control unit sends the information to the mobile robot using a first communication component 8.

The control unit 2 can be further configured to receive first data from the base unit, the first data comprises the information from a user about the delivery of at least one service/product. The modular container ca be configured to be fitted with the mobile robot 201 for item distribution 4. The item distribution further comprises the user terminal 401 sending at least one request to the server 301, which can be a cloud server, which further communicates with the base unit 500 where at least one modular container is parked. The user terminal 401 can also communicate with the modular container 101 via an interacting component 43.

The control unit can further comprise a first processing component 6, which comprises receiving data from the power component 60, at least one of the inputs from the sensors 62 and then controls the state 64 of the operation, which means that if all the data is in a range where the modular container is eligible to fulfil the requirements of the operation requested by the user terminal it communicates 66 this information via a first communication component 8 to the base unit 500.

The first communication component 8 can comprise Bluetooth^{®} 84, NFC 86 and/or infrared 88 communication modules. For instance, Bluetooth Low Energy (BLE) can be used to communicate between the beverage module 1 and the mobile robot 100 to reduce energy usage.

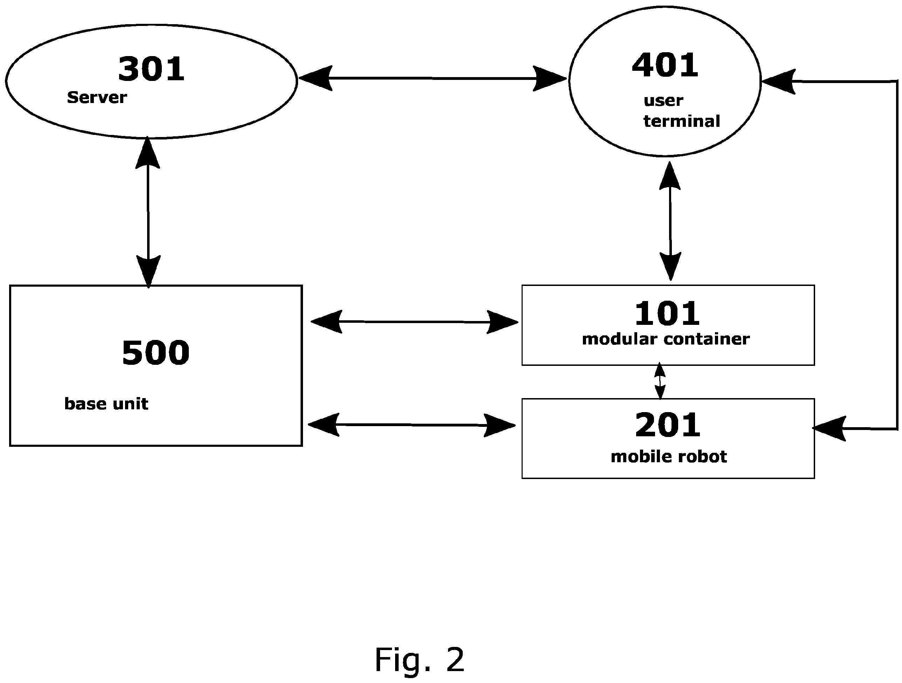

Figure 2 schematically shows communication within the delivery system including some optional elements of the system. The modular container 101 and the mobile robot 201 are configured to communicate via the first communication component 8 and the second communication component respectively. In other words, each of the mobile robot 201 and the modular container preferably have a separate control unit. The communication between the mobile robot 201 and the modular container 101 can be established via different protocols. There can also be more than one protocol used as a failsafe. The modular container can further communicate with the base unit 500 via the first communication component. The modular container 101 can send the base unit 500 information relating to its status, such as remaining battery life, health status, and/or data based on self-diagnostics and/or sensor data.

The modular container 101 can send the mobile robot 201 operational instruction or commands related to starting of the delivery process and/or locking the lid once the container 101 is securely installed. And the mobile robot 201 can send information to the modular container 101 that it has stopped and that the lid has been unlocked and opened thereby allowing the modular container to perform a function. The mobile robot 201 can also communicate with the user terminal 401 and inform the container 101 of user's requirements.

Both the container 101 and the robot 201 can be configured to communicate with the base unit 500 which is controlled by a server 301. The server 301 can be a remote server, a cloud server and/or a collection of servers. The server 301 can coordinate operations of a plurality of mobile robot/s 201 and/or modular container/s 101. The server 301 can receive requests from the user terminal 401 and send the instruction to the base unit 500. The base unit 500 can be a pod, hub, truck, garage where at least one mobile robot 201 and at least one modular container 201 is parked.

The base unit 500 can also be the caring unit for the system. The base unit 500 is configured with at least one automated and/or semi-automated handling device configured with a mechanical arm to replace the modular container 201 in the mobile robot. The mechanical arm can also be configured to lock the container 101 to the robot 201.

The base unit 500 can be configured to receive at least one command and/or requests from the server 301. Upon receiving the request, the base unit 500 can comprise searching among the parked modular container 101 at least one suitable to perform the requested task. The server 301 can further be configured with knowing the location of the recipient and can communicate with the base unit/s within a predetermined distance from the recipient. The server 301 can comprise of a self-learning module which can predict the future requests and can learn the optimized route to reach the recipient.

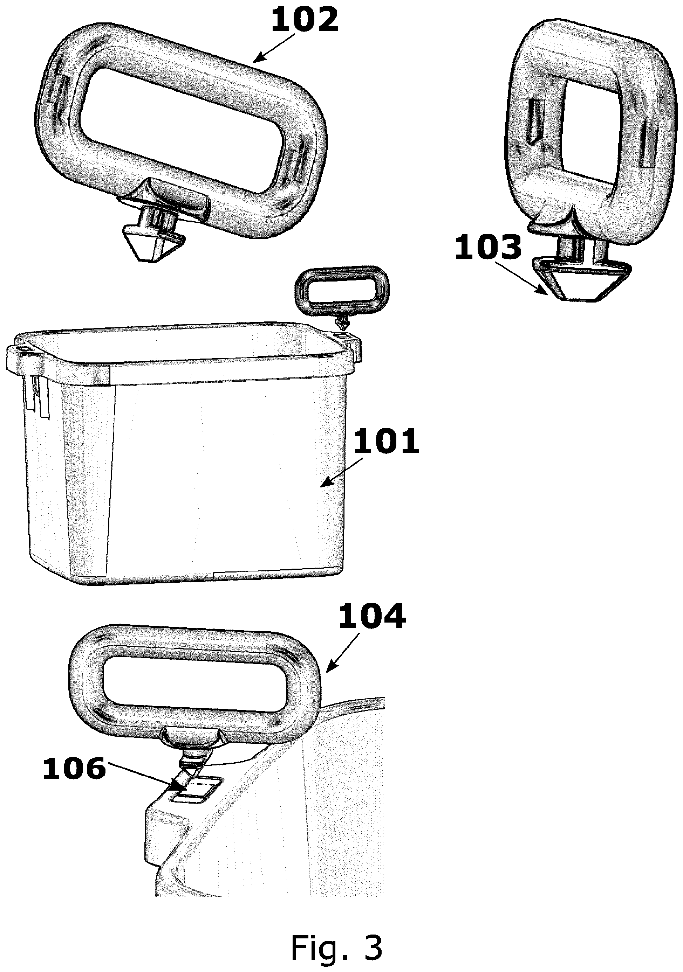

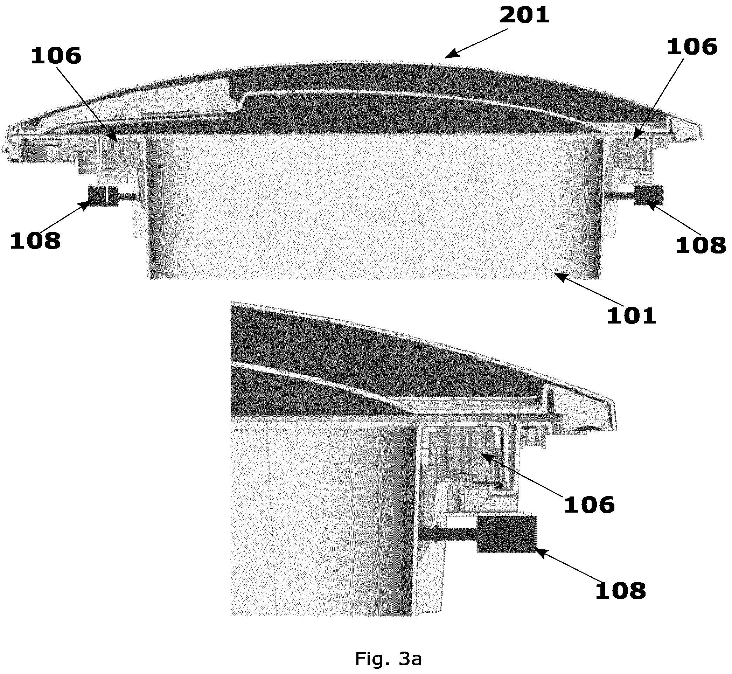

Figure 3 schematically depicts exemplary components and configuration of the modular container 101 and the first locking component. Handle 102 can be lifted by the mechanical arm at the base unit 500. Mechanical arm can be configured to lift the handle 102 above the height of the modular container. Once the handle 102 is at a predetermined height the mechanical arm can insert the handle 102 with the key 103 inside the locking hole 106. The locking hole 106 can be equipped with a twist-lock which can be twisted with the key 103. The mechanical arm can also be configured to lift the modular container 101 and install it in the mobile robot 201, such that the female part in the modular container 101 of the locking mechanism align with the male part in the mobile robot 201. The mechanical arm can further twist the handle 102 and the key 103 to an angle in the range of 60 to 120 degrees, preferably 90 degrees. This locking mechanism is configured to efficiently lock the container 101 to the mobile robot 201 during the traveling. The mechanical arm can also be configured to pull the handle 102 out once the container 101 is locked to the robot 201. The mechanical arm can further secure the handle 102 in a designated area. In general, the figure depicts an embodiment of a modular container 101 with key 103 fitted to it in the female part of the container and a handle 102 which can be used by an automated or semi-automated mechanical arm (not shown in figures) to insert the key 103 in the female part of the modular container so it can be locked to the male part of the mobile robot.

Figure 3a shows an exemplary configuration of the modular container 101 installed in the mobile robot 201 and locked via an electromagnetic locking component 108. The lock can comprise a first conducting component attached to the modular container and a second conducting component attached to the mobile robot. The first and/or the second conducting components can be configured to pass electric current through them via at least one of the at least the power component 60 and at least the second power component, which can lock the modular container and the mobile robot and can provide additional security.

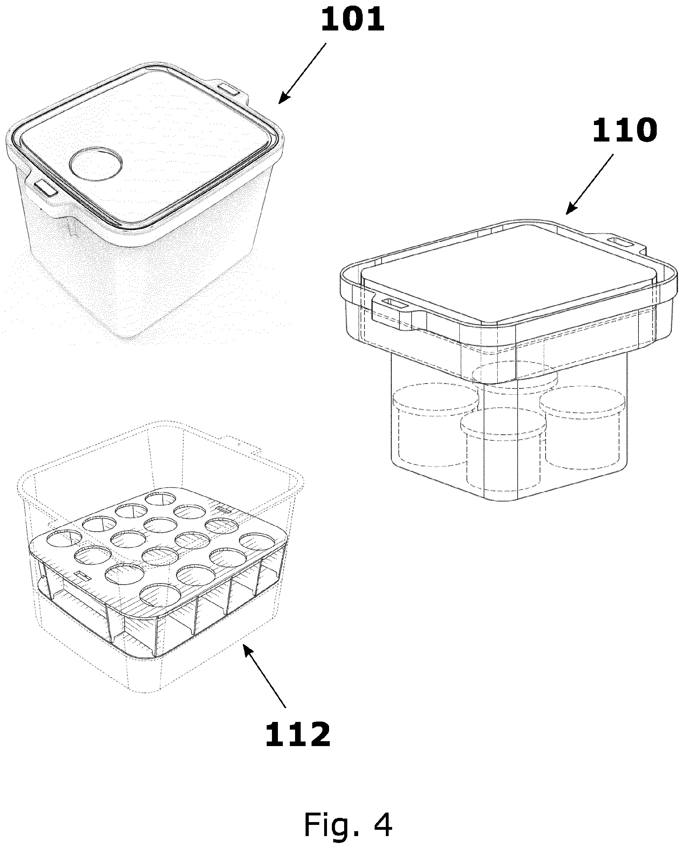

Figure 4 schematically depicts exemplary components and a configuration of the modular container 101. Herein the modular container 101 is shown to be used as a beverage holder. 110, 112 shows how the modular container 101 can be configured with different functions.

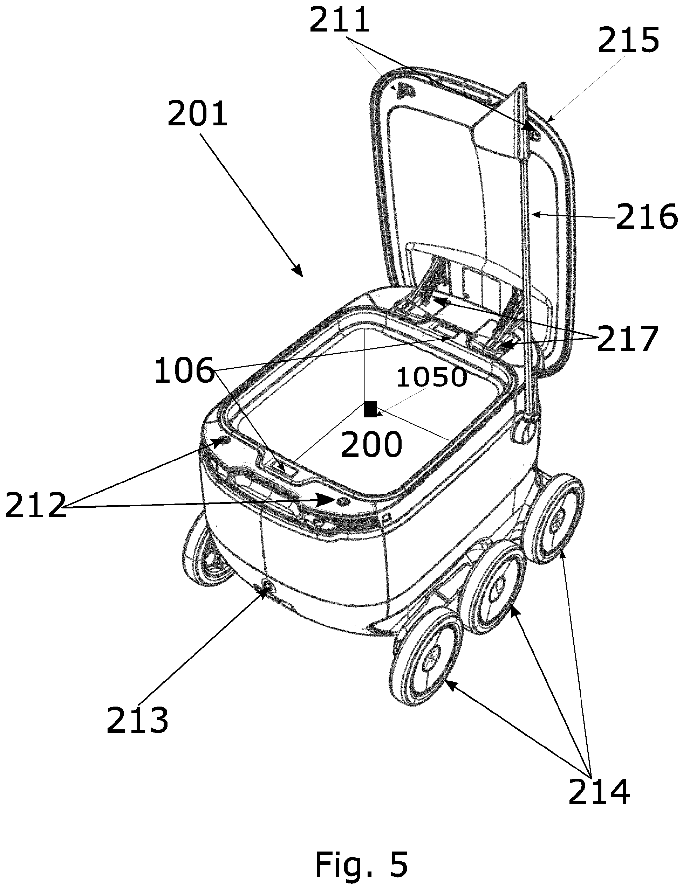

Figure 5 demonstrates an exemplary embodiment of the mobile robot 201. The mobile robot 201 can comprise a modular container 101, that is, it can transport and communicate with the modular container 101. The mobile robot 201 further comprises a motion component 214 (depicted as wheels 214). In the present embodiment, the motion component 214 comprises six wheels 214. This can be particularly advantageous for the mobile robot 201 when traversing curb stones or other similar obstacles on the way to the recipient.

The mobile robot 201 comprises a lid 215. The lid 215 can be placed over the modular container 101 and can be locked to prevent unauthorised access to the modular container 101. The lock comprises key 211 and hole 212 the key 211 is fitted to the lid 215 and the hole 212 is fitted to the mobile robot 201 and the parts are configured to interlock preferably instructed by a remote cloud server. The mobile robot further comprises lid hinges 217, the hinges 217 can be automated. The mobile robot can further comprise the other half 1050 of the placement sensor 20.

The mobile robot 201 further comprises a robot signalling device 216, depicted here as a flagpole or stick 216 used to increase the visibility of the robot 201. Particularly, the visibility of the robot 201 during road crossings can be increased. In some embodiments, the signalling device 216 can comprise an antenna. The mobile robot 201 further comprises robot headlight 213 configured to facilitate the robot's navigation in reduced natural light scenarios and/or increase the robot's visibility.

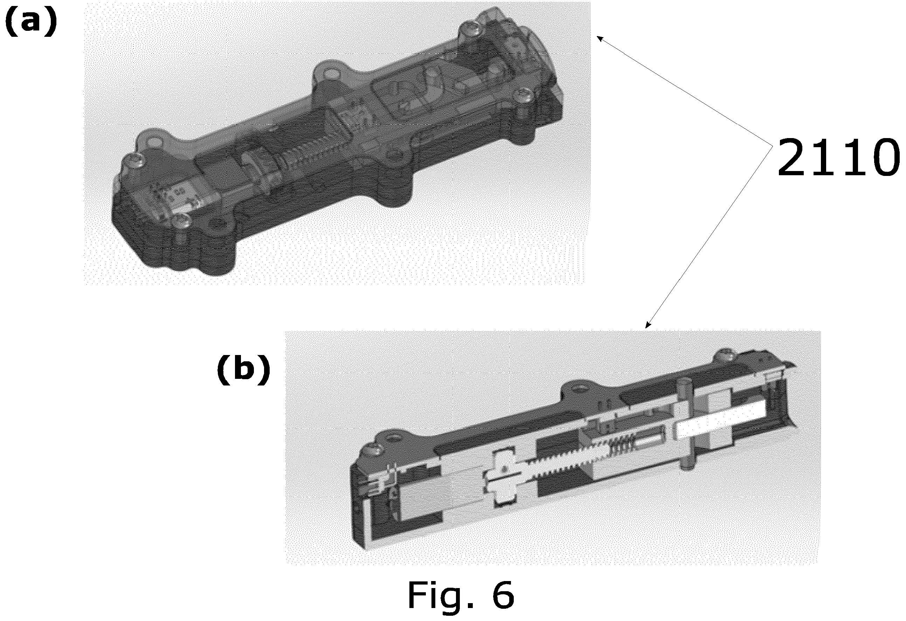

Figure 6 shows the second locking component 2110, second locking component is configured to lock the lid of the mobile robot. The lock can comprise of a spring which can be controlled by the remote server. The spring controls the motion of the two arms which when align in a specific position is the ON position.

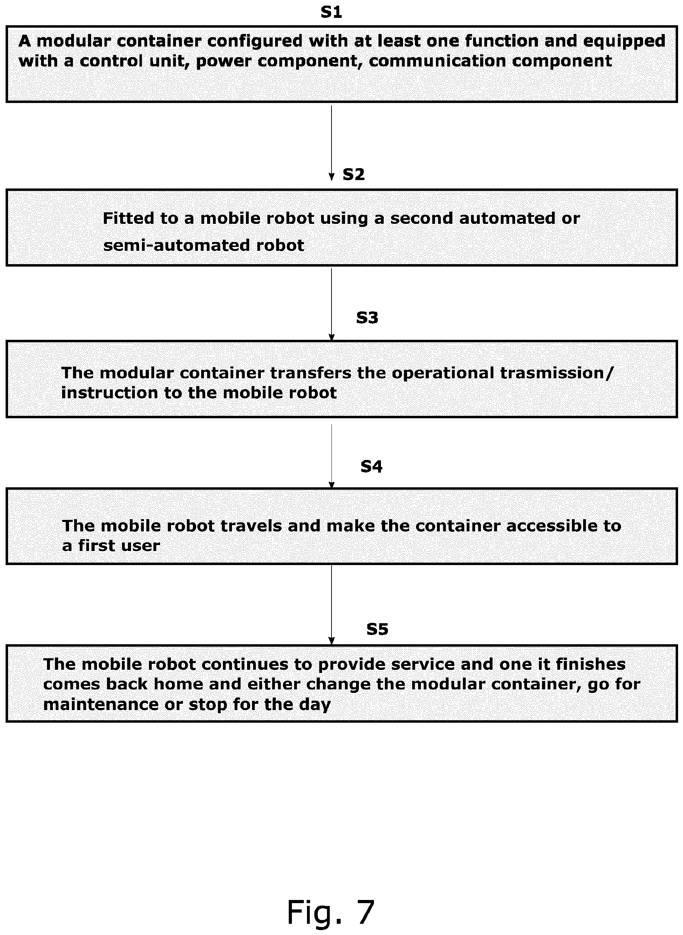

Figure 7 depicts an exemplary embodiment of a method for item distribution using the device and the system described in the present disclosure. In step S1 a modular container is equipped with at least one function. Modular container communicates this function the base unit where it is parked.

## Claims

1. A modular container (101) configured to be installed into at least one mobile robot (201), comprising:
a control unit (2);
wherein the control unit comprises a microprocessor-controlled module which is operated independently and configured for receiving sensor data;
a first communication component (6); and
a power component (60); wherein the modular container is configured to exchange at least one operation transmission with the mobile robot relating to at least one of:
secure placement of the modular container into the mobile robot;
the contents of the modular container;
status of the modular container; and
traveling area and/or region,
and wherein the modular container comprises at least one identifying component (ID) which is further configured to be unique to each modular container, wherein the ID comprises container data which further comprises information about at least one geometrical specification of the container.

2. The modular container according to the preceding claim further comprising at least one sensor, wherein the sensor comprises at least one of:
a motion sensor, configured to measure at least one numerical value of acceleration;
a placement sensor, configured to measure data relating to the installation of the modular container to the mobile robot;
a temperature sensor, configured to share temperature data within at least one compartment to the control unit;
an inclination sensor, configured to measure the modular container's inclination.

3. The modular container according to any of the preceding claims wherein the control unit is further configured for:
receiving at least one first data comprising at least one operational command from at least one sender via the first communication component;
receiving second data comprising information about battery status from the power component;
sending at least one second data to at least one recipient via the communication component;
examining status of contents of the modular container, comprising information about at least one of product levels, maintenance and malfunctioning of any component.

4. The modular container according to any of the preceding claims wherein the first communication component comprises at least one of a short-range communication component, wherein short-range comprises distances up to 100m, and wherein the modular container is configured to exchange data with the mobile robot; wherein the first communication component additionally comprises at least one long-range communication component, wherein long-range comprises distances of more than 1 km, and wherein the first communication component is configured to transmit data.

5. A modular transporting system comprising:
a mobile robot comprising
a motion component;
a second control unit;
a second communication component;
a second power component;
a modular container according to any of the preceding claims 1 to 4,
a first locking component configured to lock the modular container to the mobile robot.

6. The system according to the preceding claim further comprising a base unit comprising a handling device, the handing device comprising at least one mechanical arm, the handling device configured to fit the modular container to the mobile robot; wherein the mechanical arm is further configured to:
lift the modular container above the mobile robot;
install the modular container into the mobile robot so that the first locking component can be engaged;
twist the first locking component through an angle of at least 60 degrees.

7. The system according to claim 5 or 6, wherein the base unit is equipped with at least one of the following:
at least one parking space for the mobile robot;
at least one charging pod for at least one of the mobile robot and the modular container;
at least one third communication component;
at least one maintenance unit;
at least one servicing unit;
at least registering at least one incoming and at least one outgoing modular container ID.

8. The system according to any of the preceding claims 5 to 7, wherein the mobile robot is further equipped with at least one interactive component which is configured to provide a user information about at least one of a service and a product, the system further comprising a user interface configured to interact with the mobile robot so as to generate at least one augmented reality feature accessible to a user.

9. A method for installing at least one modular container to at least one mobile robot, the method comprising the steps of:
placing the modular container according to any of the preceding claims 1 to 4 into the mobile robot;
locking the modular container to the mobile robot;
determining at least one function of the modular container by the mobile robot;
implementing a subroutine configured according to the function of the modular container by the mobile robot.

10. The method according to the preceding claim wherein installing the modular container to the mobile robot is performed via at least one handing device comprising at least one mechanical arm, and wherein the method further comprises:
rotating the locking component by an angle of at least 60 degrees; and
unlocking the modular container from the mobile robot only when the mobile robot has reached at least one base unit;
wherein the method further comprises the steps of:
parking the mobile robot at the base unit;
charging at least one of the mobile robot and the modular container at the base unit;
maintaining at least one of the mobile robot the modular container at the base unit;
servicing at least one of the mobile robot and the modular container at the base unit;
installing a different modular container to the mobile robot;
identifying a modular container via at least one unique ID.

11. The method according to claim 9 or 10 further comprising the modular container sending operational information the mobile robot, the operational information relating to at least one of:
installing the modular container to the mobile robot;
status of the modular container;
traveling to an area and/or region; and further comprising using at least one sensor of a modular container to perform at least one of:
sensing motion;
sensing successful fitting of the modular container to the mobile robot;
sensing the temperature inside the modular container; and
sensing the inclination of the modular container.

12. The method according to any of the preceding claims 9 to 11 further comprising establishing communication between at least one user terminal and at least one base unit via at least one server, the server further accessing historical data relating to mobile robot and modular container stored in the base unit.

13. A method for providing at least one of the at least one good and at least one service via mobile robots, the method comprising:
determining demand for a good and/or service at a specified location at a specified time;
outfitting at least one mobile robot with a modular container according to any of the preceding claims 1 to 4 and configured to provide at least one of the at least one good and at least one service;
travelling to the specified location at the specified time;
providing the service at the location and time to at least one user.

14. The method according to the preceding claim wherein the method further comprises steps of:
locking the mobile robot so as to prevent any access in a closed position and allowing access to at least one part of the modular container in an open position; and
a control unit of the modular container causing the lid to change from the closed position to the open position before communicating to a second control unit of the mobile robot via a first and second communication components that the function can be performed.

## Patentansprüche

1. Modularer Behälter (101), der dazu konfiguriert ist, in mindestens einen mobilen Roboter (201) installiert zu werden, umfassend:
eine Steuereinheit (2);
wobei die Steuereinheit ein mikroprozessorgesteuertes Modul umfasst, das unabhängig betrieben wird und für den Empfang von Sensordaten konfiguriert ist;
eine erste Kommunikationskomponente (6); und
eine Leistungskomponente (60);
wobei der modulare Behälter dazu konfiguriert ist, mindestens eine Betriebsübertragung mit dem mobilen Roboter auszutauschen, die sich auf mindestens eines aus Folgendem bezieht:
sichere Platzierung des modularen Behälters in den mobilen Roboter;
den Inhalt des modularen Behälters;
Status des modularen Behälters; und
Fahrbereich und/oder -region,
und wobei der modulare Behälter mindestens eine Identifizierungskomponente (ID) umfasst, die des Weiteren dazu konfiguriert ist, für jeden modularen Behälter eindeutig zu sein, wobei die ID Behälterdaten umfasst, die des Weiteren Informationen über mindestens eine geometrische Spezifikation des Behälters umfassen.

2. Modularer Behälter nach dem vorhergehenden Anspruch, des Weiteren umfassend mindestens einen Sensor, wobei der Sensor mindestens eines aus Folgendem umfasst:
einen Bewegungssensor, der dazu konfiguriert ist, mindestens einen numerischen Wert der Beschleunigung zu messen;
einen Platzierungssensor, der dazu konfiguriert ist, Daten in Bezug auf die Installation des modularen Behälters an dem mobilen Roboter zu messen;
einen Temperatursensor, der dazu konfiguriert ist, Temperaturdaten in mindestens einem Fach an die Steuereinheit weiterzugeben;
einen Neigungssensor, der dazu konfiguriert ist, die Neigung des modularen Behälters zu messen.

3. Modularer Behälter nach einem der vorhergehenden Ansprüche, wobei die Steuereinheit des Weiteren zu Folgendem konfiguriert ist:
Empfangen von mindestens ersten Daten, die mindestens einen Betriebsbefehl umfassen, von mindestens einem Sender über die erste Kommunikationskomponente;
Empfangen von zweiten Daten, die Informationen über den Batteriestatus umfassen, von der Leistungskomponente;
Senden von mindestens zweiten Daten an mindestens einen Empfänger über die Kommunikationskomponente;
Prüfen des Status von Inhalten des modularen Behälters, der Informationen über mindestens eines aus Produktfüllständen, Wartung und Fehlfunktion einer beliebigen Komponente umfasst.

4. Modularer Behälter nach einem der vorhergehenden Ansprüche, wobei die erste Kommunikationskomponente mindestens eine Nahbereichskommunikationskomponente umfasst, wobei der Nahbereich Entfernungen bis zu 100 m umfasst, und wobei der modulare Behälter dazu konfiguriert ist, Daten mit dem mobilen Roboter auszutauschen; wobei die erste Kommunikationskomponente zusätzlich mindestens eine Fernbereichskommunikationskomponente umfasst, wobei der Fernbereich Entfernungen von mehr als 1 km umfasst, und wobei die erste Kommunikationskomponente dazu konfiguriert ist, Daten zu übertragen.

5. Modulares Transportsystem, umfassend:
einen mobilen Roboter, umfassend:
eine Bewegungskomponente;
eine zweite Steuereinheit;
eine zweite Kommunikationskomponente;
eine zweite Leistungskomponente;
einen modularen Behälter nach einem der vorhergehenden Ansprüche 1 bis 4,
eine erste Verriegelungskomponente, die dazu konfiguriert ist, den modularen Behälter an dem mobilen Roboter zu verriegeln.

6. System nach dem vorhergehenden Anspruch, des Weiteren umfassend eine Basiseinheit, umfassend eine Handhabungsvorrichtung, wobei die Handhabungsvorrichtung mindestens einen mechanischen Arm umfasst, wobei die Handhabungsvorrichtung dazu konfiguriert ist, den modularen Behälter auf den mobilen Roboter aufzusetzen; wobei der mechanische Arm des Weiteren zu Folgendem konfiguriert ist:
Heben des modularen Behälters über den mobilen Roboter;
Installieren des modularen Behälters so an dem mobilen Roboter, dass die erste Verriegelungskomponente eingerastet werden kann;
Verdrehen der ersten Verriegelungskomponente um einen Winkel von mindestens 60 Grad.

7. System nach Anspruch 5 oder 6, wobei die Basiseinheit mit mindestens einem aus Folgendem ausgestattet ist:
mindestens einem Parkplatz für den mobilen Roboter;
mindestens einer Ladestation für mindestens eines aus dem mobilen Roboter und dem modularen Behälter;
mindestens einer dritten Kommunikationskomponente;
mindestens einer Pflegeeinheit;
mindestens eine Wartungseinheit;
mindestens der Registrierung mindestens einer eingehenden und mindestens einer ausgehenden modularen Behälter-ID.

8. System nach einem der vorhergehenden Ansprüche 5 bis 7, wobei der mobile Roboter ferner mit mindestens einer interaktiven Komponente ausgestattet ist, die dazu konfiguriert ist, einem Benutzer Informationen über mindestens eines aus einer Dienstleistung und einem Produkt zu liefern, wobei das System des Weiteren eine Benutzerschnittstelle umfasst, die dazu konfiguriert ist, mit dem mobilen Roboter zu interagieren, um mindestens ein für einen Benutzer zugängliche Augmented-Reality-Funktion zu erzeugen.

9. Verfahren zum Installieren mindestens eines modularen Containers an mindestens einem mobilen Roboter, wobei das Verfahren die folgenden Schritte umfasst:
Platzieren des modularen Behälters nach einem der vorhergehenden Ansprüche 1 bis 4 in den mobilen Roboter;
Verriegeln des modularen Behälters an dem mobilen Roboter;
Bestimmen mindestens einer Funktion des modularen Behälters durch den mobilen Roboter;
Implementieren einer Unterroutine, die entsprechend der Funktion des modularen Behälters konfiguriert ist, durch den mobilen Roboter.

10. Verfahren nach dem vorhergehenden Anspruch, wobei das Installieren des modularen Behälters an dem mobilen Roboter über mindestens eine Handhabungsvorrichtung, die mindestens einen mechanischen Arm umfasst, durchgeführt wird, und wobei das Verfahren des Weiteren umfasst:
Verdrehen der Verriegelungskomponente um einen Winkel von mindestens 60 Grad; und
Entriegeln des modularen Behälters vom mobilen Roboter nur dann, wenn der mobile Roboter
mindestens eine Basiseinheit erreicht hat;
wobei das Verfahren des Weiteren folgende Schritte umfasst:
Parken des mobilen Roboters an der Basiseinheit;
Aufladen von mindestens einem aus dem mobilen Roboter und dem modularen Behälter an der Basiseinheit;
Pflegen von mindestens einem aus dem mobilen Roboter und dem modularen Behälter an der Basiseinheit;
Warten von mindestens einem aus dem mobilen Roboter und dem modularen Behälter an der Basiseinheit;
Installieren eines anderen modularen Behälters an dem mobilen Roboter;
Identifizieren eines modularen Behälters über mindestens eine eindeutige ID.

11. Verfahren nach Anspruch 9 oder 10, des Weiteren umfassend, dass der modulare Behälter Betriebsinformationen an den mobilen Roboter sendet, wobei sich die Betriebsinformationen auf mindestens eines aus Folgendem beziehen:
Installieren des modularen Behälters an dem mobilen Roboter;
Status des modularen Behälters;
Fahren zu einem Bereich und/oder einer Region; und des Weiteren umfassend das Verwenden von mindestens einem Sensor eines modularen Behälters, um mindestens eines aus Folgendem durchzuführen:
Erfassen von Bewegung;
Erfassen des erfolgreichen Aufsetzens des modularen Behälters auf den mobilen Roboter;
Erfassen der Temperatur im Inneren des modularen Behälters; und
Erfassen der Neigung des modularen Behälters.

12. Verfahren nach einem der vorhergehenden Ansprüche 9 bis 11, des Weiteren umfassend das Herstellen der Kommunikation zwischen mindestens einem Benutzerendgerät und mindestens einer Basiseinheit über mindestens einen Server, wobei der Server ferner auf historische Daten zugreift, die sich auf den mobilen Roboter und den modularen Behälter beziehen, die in der Basiseinheit gespeichert sind.

13. Verfahren zum Bereitstellen von mindestens einem aus der mindestens einen Ware und mindestens einer Dienstleistung über mobile Roboter, wobei das Verfahren Folgendes umfasst:
Bestimmen der Nachfrage nach einer Ware und/oder Dienstleistung an einem bestimmten Ort und zu einer bestimmten Zeit;
Ausrüsten mindestens eines mobilen Roboters mit einem modularen Behälter nach einem der vorhergehenden Ansprüche 1 bis 4 und konfiguriert, um mindestens eines aus der mindestens einen Ware und der mindestens einen Dienstleistung bereitzustellen;
Fahren zu dem bestimmten Ort zu der bestimmten Zeit;
Bereitstellen des Dienstes an dem Ort und zu der Zeit für mindestens einen Benutzer.

14. Verfahren nach dem vorhergehenden Anspruch wobei das Verfahren des Weiteren folgende Schritte umfasst:
Verriegeln des mobilen Roboters, um in einer geschlossenen Position jeglichen Zugang zu verhindern und in einer offenen Position den Zugang zu mindestens einem Teil des modularen Behälters zu ermöglichen; und
Bewirken, durch eine Steuereinheit des modularen Behälters, dass der Deckel von der geschlossenen Position in die offene Position wechselt, bevor sie einer zweiten Steuereinheit des mobilen Roboters über eine erste und eine zweite Kommunikationskomponente mitteilt, dass die Funktion ausgeführt werden kann.

## Revendications

1. Conteneur modulaire (101) configuré pour être installé dans au moins un robot mobile (201), comprenant:
une unité de commande (2);
l'unité de commande comprenant un module commandé par microprocesseur qui fonctionne de manière indépendante et est configuré pour recevoir des données de capteur;
un premier composant de communication (6); et
un composant de puissance (60);
le conteneur modulaire étant configuré pour échanger au moins une transmission d'opération avec le robot mobile concernant au moins l'un parmi:
un placement sécurisé du conteneur modulaire dans le robot mobile;
le contenu du conteneur modulaire;
un état du conteneur modulaire; et
la zone et/ou la région de déplacement,
et le conteneur modulaire comprenant au moins un composant d'identification (ID) qui est en outre configuré pour être propre à chaque conteneur modulaire, l'ID comprenant des données de conteneur qui comprennent en outre des informations sur au moins une spécification géométrique du conteneur.

2. Conteneur modulaire selon la revendication précédente, comprenant en outre au moins un capteur, le capteur comprenant au moins l'un parmi:
un capteur de mouvement, configuré pour mesurer au moins une valeur numérique d'accélération;
un capteur de placement, configuré pour mesurer des données relatives à l'installation du conteneur modulaire sur le robot mobile;
un capteur de température, configuré pour partager des données de température à l'intérieur d'au moins un compartiment avec l'unité de commande;
un capteur d'inclinaison, configuré pour mesurer l'inclinaison du conteneur modulaire.

3. Conteneur modulaire selon l'une quelconque des revendications précédentes, dans lequel l'unité de commande est en outre configurée pour:
recevoir au moins une première donnée comprenant au moins une commande opérationnelle provenant d'au moins un expéditeur par l'intermédiaire du premier composant de communication;
recevoir des secondes données comprenant des informations sur l'état de la batterie en provenance du composant de puissance;
envoyer au moins une seconde donnée à au moins un destinataire par l'intermédiaire du composant de communication;
examiner un état de contenu du conteneur modulaire, comprenant des informations sur au moins l'un des niveaux de produit, la maintenance et le dysfonctionnement de tout composant.

4. Conteneur modulaire selon l'une quelconque des revendications précédentes, dans lequel le premier composant de communication comprend au moins un composant de communication à courte portée, la courte portée comprenant des distances allant jusqu'à 100 m, et dans lequel le conteneur modulaire est configuré pour échanger des données avec le robot mobile; dans lequel le premier composant de communication comprend en outre au moins un composant de communication à longue portée, la longue portée comprenant des distances de plus de 1 km, et dans lequel le premier composant de communication est configuré pour transmettre des données.

5. Système de transport modulaire comprenant:
un robot mobile comprenant:
un composant de mouvement;
une seconde unité de commande;
un second composant de communication;
un second composant de puissance;
un conteneur modulaire selon l'une quelconque des revendications précédentes 1 à 4,
un premier composant de verrouillage configuré pour verrouiller le conteneur modulaire au robot mobile.

6. Système selon la revendication précédente, comprenant en outre une unité de base comprenant un dispositif de manipulation, le dispositif de manipulation comprenant au moins un bras mécanique, le dispositif de manipulation étant configuré pour adapter le conteneur modulaire au robot mobile; dans lequel le bras mécanique est en outre configuré pour:
soulever le conteneur modulaire au-dessus du robot mobile;
installer le conteneur modulaire dans le robot mobile de telle sorte que le premier composant de verrouillage puisse être engagé;
faire tourner le premier composant de verrouillage selon un angle d'au moins 60 degrés.

7. Système selon l'une des revendications 5 ou 6, dans lequel l'unité de base est équipée d'au moins l'un parmi ce qui suit:
au moins un espace de stationnement pour le robot mobile;
au moins un module de charge pour au moins l'un du robot mobile et du conteneur modulaire;
au moins un troisième composant de communication;
au moins une unité de maintenance;
au moins une unité d'entretien;
au moins l'enregistrement d'au moins un ID de conteneur modulaire entrant et d'au moins un ID de conteneur modulaire sortant.

8. Système selon l'une quelconque des revendications précédentes 5 à 7, dans lequel le robot mobile est en outre équipé d'au moins un composant interactif qui est configuré pour fournir à un utilisateur des informations sur au moins l'un d'un service et d'un produit, le système comprenant en outre une interface utilisateur configurée pour interagir avec le robot mobile de manière à générer au moins une caractéristique de réalité augmentée accessible à un utilisateur.

9. Procédé d'installation d'au moins un conteneur modulaire sur au moins un robot mobile, le procédé comprenant les étapes consistant à:
placer le conteneur modulaire selon l'une quelconque des revendications précédentes 1 à 4 dans le robot mobile;
verrouiller le conteneur modulaire au robot mobile;
déterminer au moins une fonction du conteneur modulaire par le robot mobile;
mettre en œuvre un sous-programme configuré conformément à la fonction du conteneur modulaire par le robot mobile.

10. Procédé selon la revendication précédente, dans lequel l'installation du conteneur modulaire sur le robot mobile est effectué par l'intermédiaire d'au moins un dispositif de manipulation comprenant au moins un bras mécanique, et dans lequel le procédé comprend en outre:
faire tourner le composant de verrouillage d'un angle d'au moins 60 degrés; et
déverrouiller le conteneur modulaire du robot mobile uniquement lorsque le robot mobile a atteint au moins une unité de base;
le procédé comprenant en outre les étapes consistant à:
faire stationner le robot mobile à l'unité de base;
charger au moins l'un du robot mobile et du conteneur modulaire à l'unité de base;
assurer la maintenance d'au moins l'un du robot mobile et du conteneur modulaire à l'unité de base;
assurer l'entretien d'au moins l'un du robot mobile et du conteneur modulaire à l'unité de base;
installer un conteneur modulaire différent sur le robot mobile;
identifier un conteneur modulaire par l'intermédiaire d'au moins un ID unique.

11. Procédé selon l'une des revendications 9 ou 10 comprenant en outre l'envoi par le conteneur modulaire d'informations opérationnelles au robot mobile, les informations opérationnelles se rapportant à au moins l'un parmi:
l'installation du conteneur modulaire sur le robot mobile;
l'état du conteneur modulaire;
le déplacement vers une zone et/ou une région; et comprenant en outre l'utilisation d'au moins un capteur d'un conteneur modulaire pour effectuer au moins l'un parmi:
détecter un mouvement;
détecter la réussite de l'installation du conteneur modulaire sur le robot mobile;
détecter la température à l'intérieur du conteneur modulaire; et
détecter l'inclinaison du conteneur modulaire.

12. Procédé selon l'une quelconque des revendications précédentes 9 à 11, comprenant en outre l'établissement d'une communication entre au moins un terminal utilisateur et au moins une unité de base par l'intermédiaire d'au moins un serveur, le serveur accédant en outre aux données historiques relatives au robot mobile et au conteneur modulaire stockées dans l'unité de base.

13. Procédé de fourniture d'au moins l'un d'au moins un produit et d'au moins un service par l'intermédiaire de robots mobiles, le procédé comprenant:
déterminer la demande d'un produit et/ou d'un service à un endroit spécifié à un moment spécifié;
équiper au moins un robot mobile d'un conteneur modulaire selon l'une quelconque des revendications précédentes 1 à 4 et configuré pour fournir au moins l'un dudit au moins un produit et dudit au moins un service;
se rendre à l'endroit spécifié et au moment spécifié;
fournir le service à l'endroit et au moment indiqués à au moins un utilisateur.

14. Procédé selon la revendication précédente, dans lequel le procédé comprend en outre les étapes consistant à:
verrouiller le robot mobile de manière à empêcher tout accès dans une position fermée et permettre un accès à au moins une partie du conteneur modulaire dans une position ouverte; et
une unité de commande du conteneur modulaire amenant le couvercle à changer de la position fermée à la position ouverte avant de communiquer à une deuxième unité de commande du robot mobile par l'intermédiaire d'un premier et d'un deuxième composant de communication de telle façon que la fonction puisse être exécutée.
